# EUROPEAN PATENT SPECIFICATION

(11) **EP 3 315 239 B1**
(45) Date of publication and mention of the grant of the patent: **25.12.2019**
(21) Application number: 16196480.4
(22) Date of filing: 28.10.2016
(51) Int. Cl.: B23K 20/16, B23K 20/14, B23K 101/00

(54) **METHODS OF MANUFACTURING DUAL ALLOY BLADED ROTORS SUITABLE FOR USAGE IN GAS TURBINE ENGINES**
VERFAHREN ZUR HERSTELLUNG VON ZUR VERWENDUNG IN GASTUBRINENMOTOREN GEEIGNETE, DOPPELTLEGIERTE BESCHAUFELTE ROTOREN
PROCÉDÉS DE FABRICATION DE ROTORS À DOUBLE ALLIAGE DESTINÉS À ÊTRE UTILISÉS DANS DES MOTEURS À TURBINE À GAZ

(43) Date of publication of application: 02.05.2018
(73) Proprietor: Honeywell International Inc., Morris Plains, NJ 07950 (US)
(72) Inventor: SMOKE, Jason, Morris Plains, NJ New Jersey 07950 (US); JAN, David K, Morris Plains, NJ New Jersey 07950 (US); MITTENDORF, Don, Morris Plains, NJ New Jersey 07950 (US); LUDWIG, Brent, Morris Plains, NJ New Jersey 07950 (US); MINER, Amandine, Morris Plains, NJ New Jersey 07950 (US); CHASE, Deanna Pinar, Morris Plains, NJ New Jersey 07950 (US)
(74) Representative: Houghton, Mark Phillip

(56) References cited:
- EP-A1- 2 865 482
- EP-A2- 2 626 169
- EP-A2- 2 952 687
- US-A1- 2015 144 496

## Description

### TECHNICAL FIELD

The present invention relates generally to bladed rotors well suited for usage in gas turbine engines and, more particularly, to dual alloy bladed rotors and methods for the production thereof.

### BACKGROUND

A Gas Turbine Engine (GTE) can contain various different combinations of bladed rotors, such as axial compressor, radial or centrifugal compressor, axial turbine, radial-inflow turbine, and fan rotors. The thermal and mechanical demands placed on a particular bladed rotor can vary significantly across the rotor during GTE operation. Generally, the rotor blades are bathed in core gas flow and thus exposed to high temperature, chemically-harsh (e.g., corrosive and oxidative) environments. In contrast, the inner "hub disk" portion of the rotor is largely shielded from core gas flow, but may be subject to considerable mechanical stress resulting from the centrifugal forces acting on the rotor at high rotational speeds. Performance benefits can consequently be realized by fabricating the hub disk and rotor blades from different alloys tailored to their specific operating environments. For example, a so-called "inserted blade rotor" can be produced by attaching a number of bladed pieces composed of a first superalloy to a separately-fabricated rotor hub composed of a different superalloy. The bladed pieces are fabricated to include shanks, which are inserted into mating slots provided around the periphery of the hub disk. The shanks and mating slots are formed to have an interlocking geometry, such as a fir tree or dove tail interface, to prevent disengagement of the bladed pieces in a radial direction during high speed rotation of the rotor.

While enabling the production of a bladed rotor having a hub disk and bladed pieces fabricated from different alloys, the above-described inserted blade manufacturing approach is limited in certain respects. The formation of geometrically complex mating interfaces between the blade shanks and the hub disk can require multiple precision machining steps, which add undesired cost, duration, and complexity to the rotor manufacturing process. As a further drawback, the mating shank-disk interfaces can be difficult to seal. If not fully sealed, such interfaces can permit undesired leakage across the bladed rotor and trap debris increasing the propensity of the rotor to corrode. As a still further drawback, the formation of the mating shank-disk interfaces may necessitate an increase in the overall size and weight of the bladed rotor to achieve a structural integrity comparable to that of a monolithic or single piece bladed rotor. More recently, manufacturing approaches have been developed in which a full blade ring and a hub disk are separately produced from different superalloys and then metallurgically consolidated to produce a so-called "dual alloy bladed rotor." As conventionally proposed and implemented, however, such approaches for manufacturing dual alloy bladed rotors remain limited in certain respects; e.g., such manufacturing approaches may prevent or render impractical the usage of single crystal and directionally-solidified superalloy in producing the rotor blades.

Patent document numbers EP2865482A1, EP2626169A2, US2015/144496A1 and EP2952687A2 describe methods for the manufacture of gas turbine engine rotors and components.

It is thus desirable to provide methods for manufacturing a dual alloy bladed rotor that overcome one or more of the above-described limitations. For example, it is desirable to provide methods for manufacturing dual alloy bladed rotors that reduce leakage across the bladed rotor, that minimize the overall size and weight of the bladed rotor, and that are generally less complex and costly to perform relative to other known rotor manufacturing approaches. Ideally, embodiments of such a manufacturing process would further enable fabrication of the rotor blades from a wide variety of high temperature materials including single crystal and directionally-solidified superalloys. It would also be desirable to provide embodiments of a dual alloy bladed rotor produced utilizing such a manufacturing process. Other desirable features and characteristics of embodiments of the present invention will become apparent from the subsequent Detailed Description and the appended Claims, taken in conjunction with the accompanying drawings and the foregoing Background.

### BRIEF SUMMARY

The present invention in its various aspects is as set out in the appended claims.

Methods for manufacturing dual alloy bladed rotors are provided. In one embodiment, the method includes arranging bladed pieces in a ring formation such that contiguous bladed pieces contact along shank-to-shank bonding interfaces. The blade pieces may or may not be cooled bladed pieces including internal channels, slots, or other cooling features. The ring formation is positioned around a hub disk, which is contacted by the bladed pieces along a shank-to-hub bonding interface. A metallic sealing material, such as an alloy or an essentially pure metal, is deposited between contiguous bladed pieces to produce an annular seal around the ring formation. The metallic sealing material is usefully deposited utilizing a localized, fusion-based deposition process, such as a computer controlled laser or electron beam welding process. A hermetic cavity is then formed, which is circumferentially bounded by the annular seal and which encloses the shank-to-shank and shank-to-hub bonding interface. Afterwards, a Hot Isostatic Pressing (HIP) process is performed during which the ring formation and the hub disk are exposed to elevated temperatures and pressures external to the hermetic cavity sufficient to bond the shank-to-shank and shank-to-hub bonding interface.

In another embodiment of the manufacturing process, bladed pieces are arranged in a ring formation such that flow path junctures are formed between contiguous bladed pieces extending across an outer circumferential surface of the ring formation. A metallic sealing material is deposited along the flow path junctures to form a hermetic annular seal around the outer circumferential surface of the ring formation. A HIP process is then performed to diffusion bond contiguous bladed pieces in the ring formation and yield a metallurgically-consolidated blade ring. During the HIP process, the ring formation is heated to elevated temperatures, while a pressure differential is created across the hermetic annular seal sufficient to induce the desired diffusion bonding. In certain implementations wherein the bladed pieces are cast from a blade alloy, such as a single crystal or directionally-solidified superalloy, the method can further include positioning the ring formation around a hub disk composed of a superalloy different than the blade alloy. In such implementations, the hub disk is usefully diffusion bonded to the metallurgically-consolidated blade ring in parallel with diffusion bonding of the contiguous bladed pieces.

Dual alloy bladed rotors suitable for usage within gas turbine engines are further provided. In one embodiment, the dual alloy bladed rotor includes a hub disk composed of a hub disk alloy and diffusion bonded to a metallurgically-consolidated blade ring. The metallurgically-consolidated blade ring is comprised of a plurality of bladed pieces diffusion bonded at shank-to-shank bonding interfaces. The plurality of bladed pieces are each fabricated from a blade alloy different than the hub disk alloy. In certain implementations wherein the blade alloy is a single crystal or directionally-solidified superalloy, the dual alloy bladed rotor may further include grain boundary strengthening layers provided at the shank-to-shank bonding interfaces. In other implementations, the metallurgically-consolidated blade ring further includes flow path junctures between adjacent ones of the plurality of bladed pieces, as well as flow path joints formed along the flow path junctures and composed of a metallic sealing material having a ductility greater than that of the blade alloy. In such implementations, the metallurgically-consolidated blade ring may still further include open trenches, which extend along the flow path joints and which are substantially filled with the metallic sealing material.

### BRIEF DESCRIPTION OF THE DRAWINGS

At least one example of the present invention will hereinafter be described in conjunction with the following figures, wherein like numerals denote like elements, and:
FIG. 1 is a flowchart setting-forth an exemplary method for manufacturing a dual alloy bladed rotor, as illustrated in accordance with an exemplary embodiment of the present invention;
FIG. 2 is an isometric view of a bladed piece that may be independently produced or otherwise obtained along with a number of like bladed pieces during the exemplary manufacturing process of FIG. 1;
FIGs. 3 and 4 are isometric and cross-sectional views, respectively, of a tooling assembly maintaining the bladed piece shown in FIG. 2 and a number of similar bladed pieces in a ring formation for further processing;
FIGs. 5 and 6 are isometric and detailed isometric views, respectively, of the tooling assembly and bladed pieces shown in FIGs. 3-4 illustrating the deposition of a metallic sealing material between contiguous bladed pieces to produce an annular seal around the ring formation and thereby yield a sealed, sealed ring formation;
FIG. 7 is an isometric view of the sealed ring formation after machining of the inner circumferential surface thereof and removal from the tooling assembly shown in FIGs. 3-6;
FIGs. 8 and 9 are isometric views of the forward and aft, respectively, of the sealed, sealed ring formation after positioning around a hub disk, which is enclosed by a hermetic cavity defined by the annular seal of the ring formation and axially-opposed diaphragms; and
FIG. 10 is an isometric view of the completed dual alloy bladed rotor after diffusion bonding of contiguous bladed pieces along the shank-to-shank bonding interfaces, diffusion bonding of the bladed pieces to the hub disk along the shank-to-hub bonding interface, and final machining of the bladed rotor.

### DETAILED DESCRIPTION

The following Detailed Description is merely exemplary in nature and is not intended to limit the invention or the application and uses of the invention. Furthermore, there is no intention to be bound by any theory presented in the preceding Background or the following Detailed Description.

The following describes embodiments of a method for manufacturing a dual alloy bladed rotor, which is well-suited for usage within gas turbine engines and other turbomachines. The dual alloy bladed rotor can be produced utilizing a hub disk and a number of bladed pieces, which are cast or otherwise produced from a blade alloy. During manufacture, the bladed pieces are arranged in a ring formation, and a metallic sealing material, such as an alloy or an essentially pure metal, is deposited between contiguous bladed pieces to produce an outer circumferential seal around the ring formation. The metallic sealing material is advantageously deposited utilizing a computer-controlled localized fusion deposition process, such as a laser or electron beam welding process, to limit the heat input to the rotor blades and better preserve blade alloy strength. A Hot Isostatic Pressing (HIP) process is then carried-out to diffusion bond the bladed pieces along their mating interfaces and produce a metallurgically-consolidated blade ring in an embodiment. During the HIP process, the bladed pieces are also usefully diffusion bonded to the hub disk, which is fabricated from a hub disk alloy different than the blade alloy. Final processing steps, such as detailed machining and the application of coatings or coating systems, may then be performed to complete the bladed rotor. By virtue of such a manufacturing process, the hub disk can be fabricated from a first alloy (e.g., an equiax superalloy) having relatively high mechanical strength at operational temperatures, while the rotor blades are produced from a second alloy (e.g., a single crystal or directionally-solidified superalloy) providing good mechanical strength and oxidation resistance under high temperature conditions. The temperature capabilities and performance characteristics of the dual alloy bladed rotor can be optimized as a result. Additional benefits are also achieved utilizing such a manufacturing process, as will become apparent from the following description.

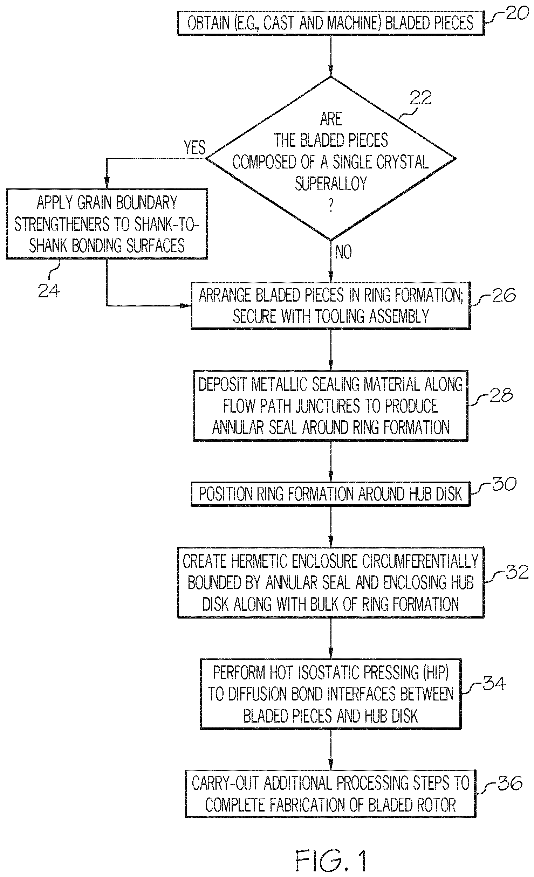

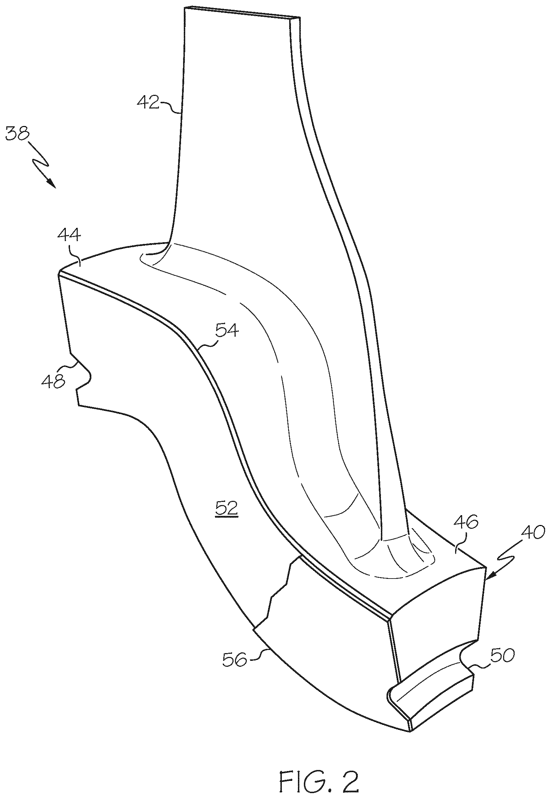

An exemplary process for manufacturing a dual alloy bladed rotor will now be described in conjunction with FIGs. 1-10. For purposes of explanation, the following describes the exemplary manufacturing process in conjunction with the manufacture of a particular type of bladed rotor; specifically, a radial turbine rotor shown at various stages of completion in FIGs. 2-10. As a point of emphasis, the following description is provided by way of non-limiting example only. In further embodiments, the below-described manufacturing process can be utilized to produce various other types of bladed rotors including a plurality of blades or airfoils bonded (e.g., metallurgically consolidated) into a blade ring, which can be, but is not necessarily diffusion bonded to an inner body or hub disk. A non-exhaustive list of other rotors that can be produced utilizing embodiments of the below-described manufacturing process include other types of radial turbine rotors, axial turbine rotors, axial compressor rotors, radial or centrifugal compressor rotors (also referred to as "impellers"), and fan rotors. More generally, the dual alloy bladed rotors described herein can be utilized within any type of gas turbine engine or turbomachine, regardless of application or design.

FIG. 1 is a flowchart setting-forth an exemplary method **18** for manufacturing a dual alloy bladed rotor, such as a turbine or compressor wheel, as illustrated in accordance with an exemplary embodiment of the present invention. In the exemplary embodiment shown in FIG. 1, method **18** includes a number of STEPS **20, 22, 24, 26, 28, 30, 32, 34,** and **36,** as described sequentially below. Depending upon the particular manner in which method **18** is implemented, each step generically illustrated in FIG. 1 may entail a single process or multiple individual sub-processes. Furthermore, the steps illustrated in FIG. 1 and described below are provided by way of non-limiting example only. In alternative embodiments of method **18,** additional steps may be performed, certain steps may be omitted, and/or the illustrated steps may be performed in alternative sequences.

Exemplary method **18** commences with obtaining a number of bladed pieces (STEP **20,** FIG. 1). The bladed pieces can be independently produced, purchased from a supplier, or otherwise obtained during STEP **20.** The bladed pieces can be produced utilizing any one of a number of different manufacturing techniques and from various different materials. For example, the bladed pieces can be individually cast from a superalloy having a relatively high mechanical strength under high temperature conditions. Machining can be performed post-casting, if needed. In one embodiment, each bladed piece is cast or otherwise produced from a single crystal or directionally-solidified superalloy having its crystallographic grain structure oriented to provide optimal mechanical strength in a radial direction. A creep-resistant, single crystal, nickel-based superalloy may be utilized, such as the nickel-based superalloys commercially identified as "CMSX 3," "CMSX 4," "SC180," and "1484," to list but a few examples. In further embodiments, the bladed pieces can be produced in other manners and fabricated from other high temperature materials, such as equiaxed superalloys.

The initial fabrication of a plurality of discrete bladed pieces provides several advantages as compared to the production of full blade ring. By initially casting or otherwise producing individual bladed pieces, any defective or unusable pieces can be identified prior to integration into the metallurgically-consolidated or diffusion bonded blade ring. This allows a reduction in scrap volume and cost as compared to a single shot casting process wherein any voiding, occlusions, or other defects may require rejection of the entire ring casting. The casting process can typically be more reliably and precisely controlled for smaller volume pieces. Casting individual bladed pieces thus generally provides higher yields due to more reliable filling of the individual bladed pieces. Additionally, individual bladed pieces can facilitate the production of bladed pieces having relatively complex external and internal features, such as internal cooling passages and heat transfer enhancement features. Furthermore, as indicated above, casting of individual bladed pieces facilitates production of the blade pieces from a wide variety of superalloys including directionally-solidified and single crystal superalloys.

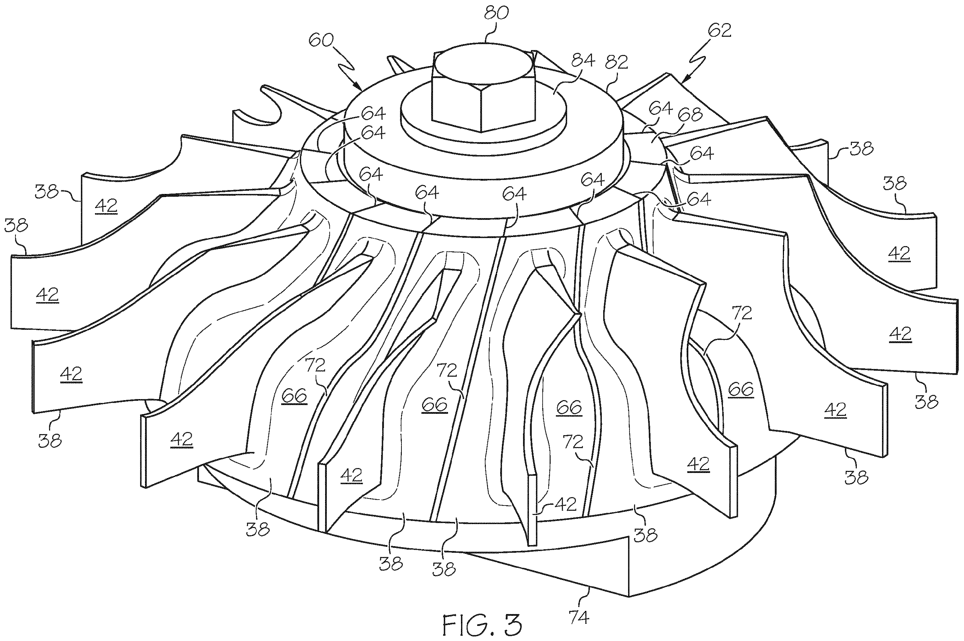

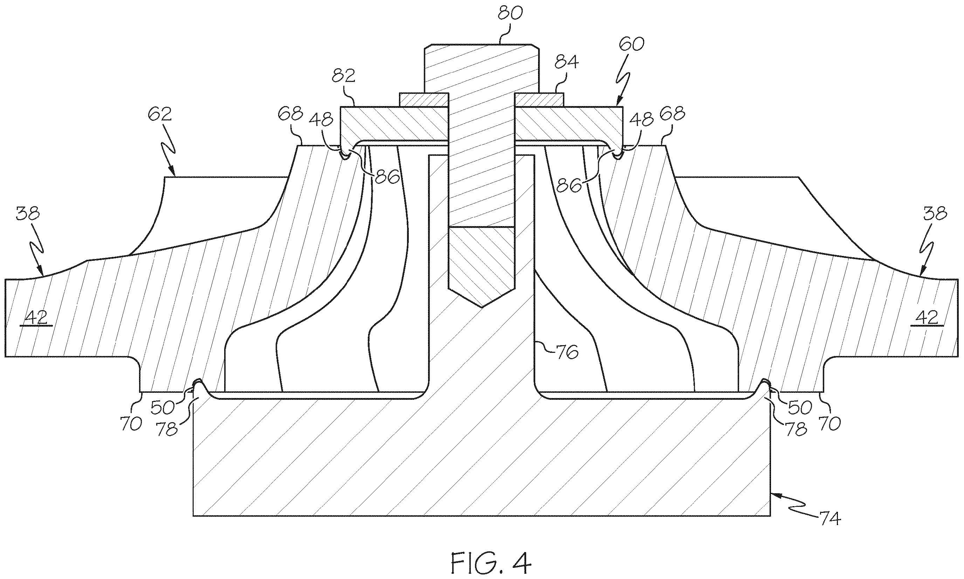

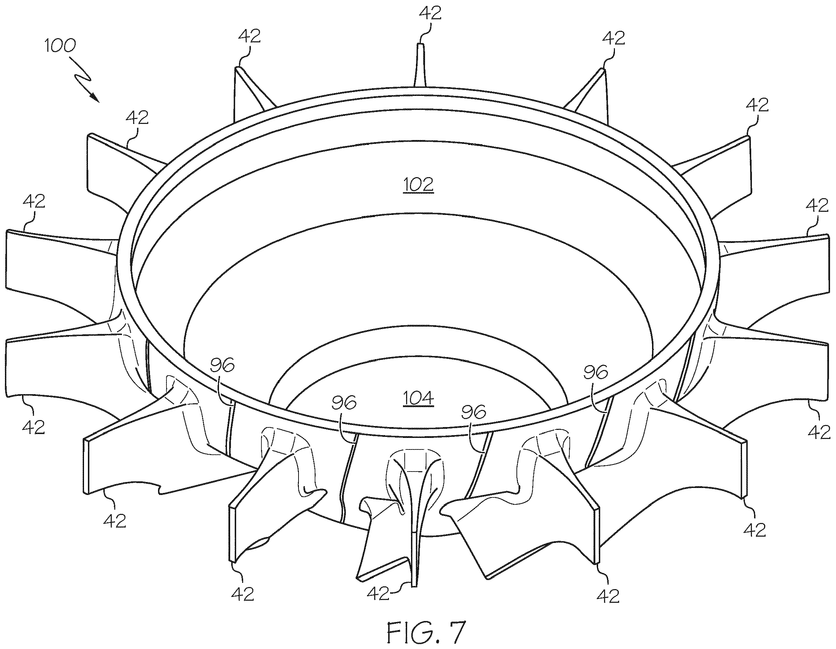

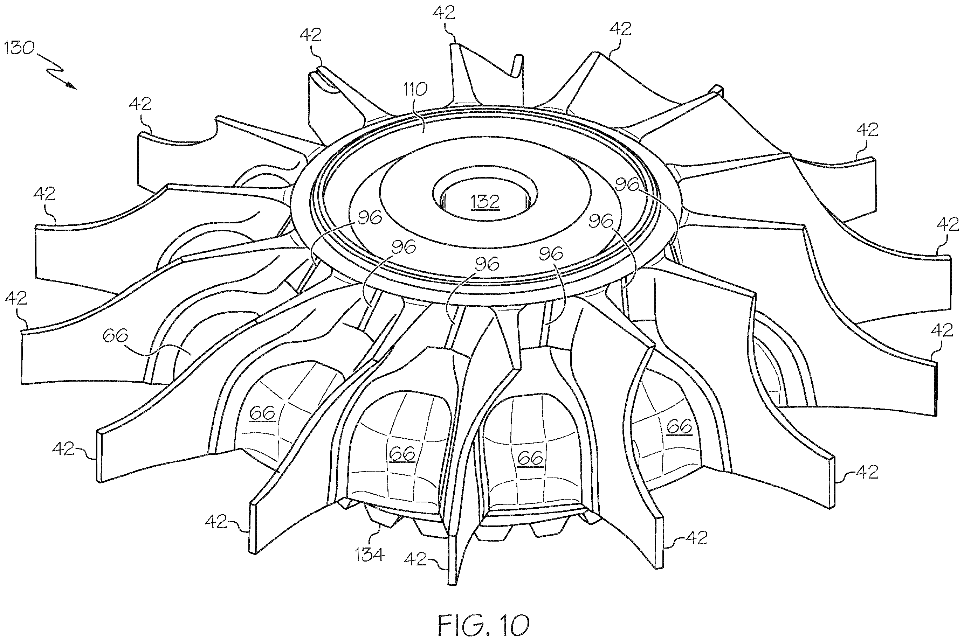

FIG. 2 is an isometric view of an exemplary bladed piece **38** that may be obtained during STEP **20** of method **18** (FIG. 1) along with a number of similar bladed pieces (not shown). Bladed piece **38** includes a wedge-shaped body or shank **40** from which an airfoil or blade **42** extends. In this example, shank **40** has been cast or otherwise fabricated to include an outer sacrificial portion that envelops or encompasses the desired shape of the completed shank. Stated differently, shank **40** is a rough casting or preform physically embodying the finished shank, which may later be defined by further machining as described below in conjunction with FIGs. 7 and 10. Shank **40** includes shoulders **44** and **46,** which extend from the central body of shank **40** in opposing axial directions. Tooling contact features **48** and **50** are formed in the opposing fore-aft faces of shoulders **44** and **46,** respectively; that is, the faces of shoulders **44** and **46** facing in opposing directions along the fore-aft axis of bladed piece **38.** In this example, tooling contact features **48** and **50** each comprise an arced segment of an annular groove, which has a wedge-shaped cross-sectional geometry. The annular groove is fully formed when bladed piece **38** and a number of like bladed pieces are arranged in a ring formation or annular grouping, as described more fully below in conjunction with FIGs. 3 and 4.

Shank **40** further includes opposing lateral faces or sidewall surfaces **52,** only one of which can be seen in FIG. 2. Sidewall surfaces **52** are each angled to impart shank **40** with a wedge-shaped geometry, when viewed from the forward/leading or aft/trailing end thereof. Outer longitudinal-extending edges **54** of shank **40** are usefully imparted with a beveled or chamfered geometry. In embodiments wherein bladed piece **38** is cast, chamfered edges **54** can be produced during the initial casting process or, instead, formed post-casting utilizing a machining process. By producing bladed piece **38** and other non-illustrated bladed pieces to include chamfered longitudinal edges **54,** elongated recesses are created along outer edges of the junctions between the bladed pieces when arranged in the ring formation described below in conjunction with FIGs. 3 and 4. The recesses can cooperate to form open trenches, which extend along the shank-to-shank junctions and increase the surface area available for bonding with the fusion-deposited metallic sealing material. In further embodiments, the geometry and structure of bladed piece **38** can vary; e.g., the bladed pieces may lack chamfered edges **54** and/or each bladed piece can include two or more blades. Additionally, in certain embodiments, bladed piece **38** can lack blades at the present stage of manufacture and instead include features (e.g., one or more slots having dovetail or fir tree geometries) to which one or more blades are subsequently attached. As a still further possibility, bladed piece **38** can include only a portion of one or more blades, and the remaining portion of the blade (e.g., the blade tip) can subsequently be produced utilizing an additive metal deposition process, such as a three dimensional (3D) metal printing process.

As indicated in FIG. 1 at STEP **24,** it may be desirable to apply a grain boundary strengthening layer to one or both of sidewall surfaces **52** when bladed piece **38** and the other non-illustrated bladed pieces are produced from a single crystal superalloy In such implementations, the provision of a grain boundary strengthening layer between adjacent bladed pieces can help ease the transition between the boundaries of the disparately-orientated crystalline structures of neighboring bladed pieces. The grain boundary strengthening layer can have any composition suitable for this purpose and can be applied to one or both of sidewall surfaces **52** utilizing various different deposition techniques. In one embodiment, the grain boundary strengthening layer can contain one or more metallic elements, such as iridium, tantalum, and yttrium; and may be plated onto sidewall surfaces **52** of bladed piece **38** (FIG. 2) and the other non-illustrated bladed pieces. This notwithstanding, the application of grain boundary strengtheners to sidewall surfaces **52** may be unwarranted in further embodiments, even when the bladed pieces are fabricated from a single crystal or directionally-solidified superalloy, as the boundary angle between the crystalline structures of the adjacent bladed pieces will often be relatively low.

Exemplary method **18** continues with arranging the bladed pieces in an annular grouping or ring formation (STEP **26,** FIG. 1). The bladed pieces may be loaded into a specialized tooling assembly, which maintains the bladed pieces in the ring formation during subsequent processing steps. FIGs. 3 and 4 are isometric and cross-sectional views, respectively, of an exemplary tooling assembly **60** suitable for maintaining a plurality of a bladed pieces **38** in a ring formation **62.** Each bladed piece **38** shown in FIGs. 3 and 4 is substantially identical to the bladed piece **38** shown in FIG. 2; thus, like numbering has been utilized to identify selected features of each bladed piece **38.** When arranged into ring formation **62,** the wedge-shaped shanks of bladed pieces **38** contact to form a full ring or a continuous, 360 degree hoop. Shank-to-shank bonding interfaces **64** are formed by the contacting surfaces of adjacent bladed pieces **38,** which may include sidewall surfaces **52** or any intervening layers (e.g., layers **56)** formed therebetween. Shank-to-shank bonding interfaces **64** remain unbonded at the present juncture of manufacture, but are subsequently diffusion bonded to metallurgically consolidate bladed pieces **38** into a single piece or monolithic bladed ring, as described more fully below in conjunction with STEP **34** of method **18** (FIG. 1).

When arranged into ring formation **62** shown in FIGs. 3-4, bladed pieces **38** cooperate to define a number of gas flow paths **66,** which are spaced around the outer circumference of ring formation **62** and interspersed with blades **42.** Gas flow paths **66** extend substantially across the outer surface of ring formation **62** in fore-aft directions. More specifically, each flow path **66** extends from a point adjacent the larger diameter forward face **70** of ring formation **62** (shown in FIG. 4), axially across the body of ring formation **62,** and to the smaller diameter aft face **68** of ring formation **62.** The interfaces or junctures between contiguous bladed pieces **38** exposed along outer flow paths **66** are referred to herein as "flow path junctures" and identified in FIG. 3 by reference numerals **"72."** In implementations wherein bladed pieces **38** are imparted with chamfered edges **54** (FIG. 2), chamfered edges **54** of contiguous bladed pieces **38** combine to form wedge-shaped channels or open trenches extending along flow path junctures **72.** The open trenches may subsequently be filled with a selected metallic sealing material during the below-described fusion deposition process. In other embodiments, bladed pieces **38** may lack chamfered edges **54** such that open trenches are not formed along flow path junctures **72.**

Tooling assembly **60** can have any form and include any number of components suitable for temporarily retaining bladed pieces **38** in ring formation **62** during the below-described sealing material deposition process. In the illustrated example, and as shown most clearly in FIG. 4, tooling assembly **60** includes a base piece **74** and a post or stem **76,** which extends from base piece **74** upwardly into the central opening of ring formation **62.** A lower annular lip **78** is provided around the outer circumferential edge of base piece **74.** Lower annular lip **78** has a wedge-shaped cross-sectional geometry and engages the annular groove formed by tooling contact features **50** when bladed pieces **38** are arranged in ring formation **62** and loaded into tooling assembly **60.** A bolt **80** is threaded into an opening provided in the upper end of stem **76.** When tightened, bolt **80** captures a clamp ring **82** and a washer **84** against axial face **68** of ring formation **62.** An upper annular lip **86** is further provided around the lower peripheral edge of clamp ring **82** and engages the annular groove formed in ring formation **62** by tooling contact features **48.** As bolt **80** is tightened, a clamping force is exerted across ring formation **62.** Due to the conical or wedge-shaped geometry of tooling contact features **48** and **50,** lower annular lip **78,** and upper annular lip **86,** this clamping force is exerted in axial and radially inward directions to maintain the bladed pieces **38** in an arch bound state for further processing. In this manner, tooling assembly **60** retains bladed pieces **38** in their desired positions within ring formation **62** in a secure manner. At the same time, tooling assembly **60** provides physical and visual access to the outer circumference of ring formation **62** and flow path junctures **72** along which a metallic sealing material is subsequently deposited.

Advancing to STEP **28** of exemplary method **18** (FIG. 1), a metallic sealing material is next deposited between contiguous bladed pieces **38** and along flow path junctures **72** to produce an annular seal around the outer circumference of ring formation **62.** Deposition of the metallic sealing material is advantageously carried-out utilizing a localized fusion deposition process of the type which enables precise computer control of the thermal input to the bladed pieces. Suitable localized fusion deposition processes include, but are not limited to, Ion Fusion Formation (IFF), pulsed-arc Metal Inert Gas (MIG) welding, and other additive metal manufacturing processes. Laser welding or electron beam welding processes may be especially useful in deposition of the metallic sealing material as such processes are capable of depositing a relatively thin bead of metallic sealing material in an efficient manner and utilizing a highly focused, controlled heat source (the laser or electron beam). This, in turn, allows the heat affected zones and overall heat input to the bladed pieces to be minimized, which can help reduce or eliminate any deleterious effects on blade alloy strength through the deposition process. During deposition, the metallic sealing material can be actively fed or supplied to the site-of-deposition as, for example, a metallic powder or wire. The metallic sealing material feed may be continually heated to a temperature exceeding the melt or softening point of the metallic sealing material utilizing a laser, an electron beam, or other computer-controlled heat source. The deposition process may be fully automated and carried-out in accordance with a pre-established Computer-Aided Design (CAD) model or other 3D object data. In other embodiments, the deposition process may be performed manually or utilizing semi-automated approach, in which case a pre-existing digital file may not be relied upon during the deposition process.

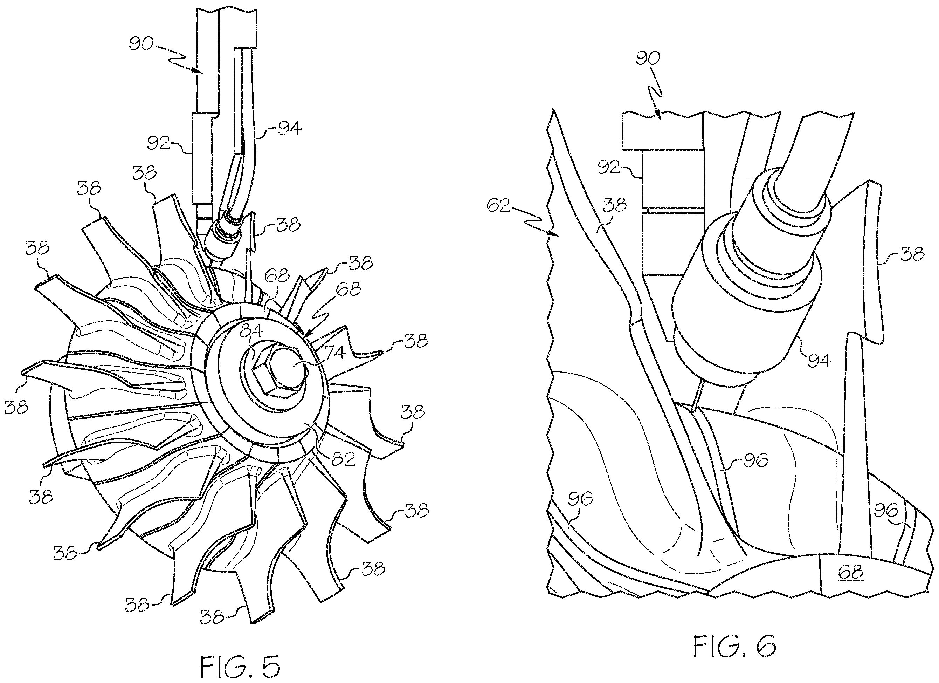

FIGs. 5 and 6 are isometric and detailed isometric views, respectively, of tooling assembly **60** and the bladed pieces **38** shown in FIGs. 3-4 illustrating the deposition of a selected metallic sealing material between contiguous bladed pieces to produce an annular seal around ring formation **62.** In this particular example, a laser welding is process carried-out utilizing a computer-controlled laser weld tool **90** having a wire feed head **94** and a laser heat source **92.** The metallic sealing material is selectively deposited to produce elongated beads or joints around the outer circumference of ring formation **62** and between contiguous bladed pieces **38.** Specifically, the metallic sealing material is deposited at the outer edges of the shank-to-shank bonding interfaces and along flow path junctures **72,** which extend across ring formation **62** in fore-aft directions. The resulting flow path joints or alloy-filled joints are identified in FIG. 6 by reference numeral "**96**"; the term "alloy-filled joint," as appearing herein, encompassing a joint at least partially filled with an alloy or an essentially pure metal. The metallic sealing material can be deposited into the open trenches in sufficient volume to fill the trenches in substantial part or in their entirety. A single pass or multiple passes can be made with laser weld tool **90** to form each alloy-filled joint **96**, depending upon the volume of material laid down in each pass of tool **90.**

The metallic sealing material utilized to form alloy-filled joints **96** can be any material that have one or more metals as its primary constituent(s) and which is amenable to fusion deposition to create a seal between bladed pieces adequate for the below-described HIP process. The metallic sealing material can be a superalloy (e.g., a nickel-based superalloy) or an essentially pure metal, such as nickel. The term "essentially pure metal" is defined herein as a metal that is at least 99 percent pure, by weight. It is also desirable for the selected metallic sealing material to have a melt point less than the melt point of the alloy from which bladed pieces **38** are produced (referred to herein as the "blade alloy"). By selecting the metallic sealing material to have a lower melt point than does the blade alloy material, undesired melting and resolidification of the blade alloy can be avoided or at least minimized during the fusion deposition process. It is also desirable for the metallic sealing material to have a relatively high ductility to minimize the formation of cracks and other defects within alloy-filled joints **96** as the metallic sealing material cools, solidifies, and shrinks. In this regard, the metallic sealing material can be selected to have a ductility greater than that of the blade alloy and, perhaps, greater than that of the below-described hub disk alloy. The particular alloy or metal selected for usage as the metallic sealing material will vary amongst embodiments and in relation to the blade alloy. In certain embodiments, the metallic sealing material may be composed of the blade alloy material admixed with one or more melt point suppressants. In further embodiments, a commercially-available superalloy, such as a 600 series INCONEL, can be selected for usage as the metallic sealing material.

The deposition of the metallic sealing material and the resultant formation of alloy-filled joints **96** creates an annular, gas-tight seal around the outer circumference of ring formation **62.** The deposited sealing material may also provide a relatively weak mechanical bond between bladed pieces **38** to yield a sealed, sealed ring formation having sufficient structural integrity to allow removal from tooling assembly **60.** After removal from tooling assembly **60,** the inner surface of sealed ring formation may be machined to bring the sealed ring formation to desired dimensions and to impart the interior of the sealed ring formation with a desired surface finish. In embodiments wherein bladed pieces **38** are further diffusion bonded to a hub disk during the below-described HIP process, machining of the interior surface of the sealed ring formation can help to ensure a close fitting relationship with the hub disk. This may be appreciated more fully by referring to FIG. 7 wherein the sealed ring formation is identified by reference numeral "**100**." As can be seen, an inner surface **102** of sealed ring formation **100** has been turned or otherwise machined to impart central opening **104** with a desired contour and dimensions, which may correspond with the outer contour and dimensions of a hub disk.

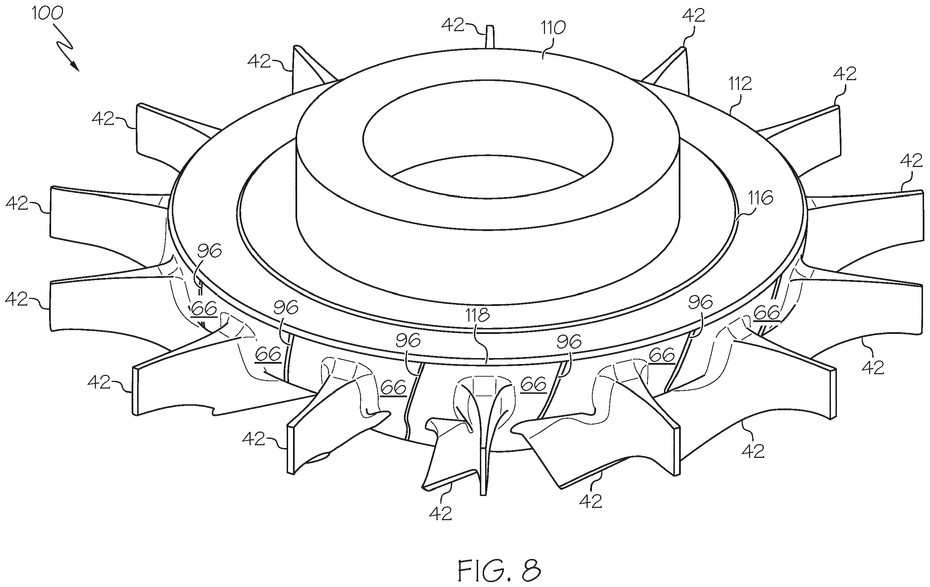

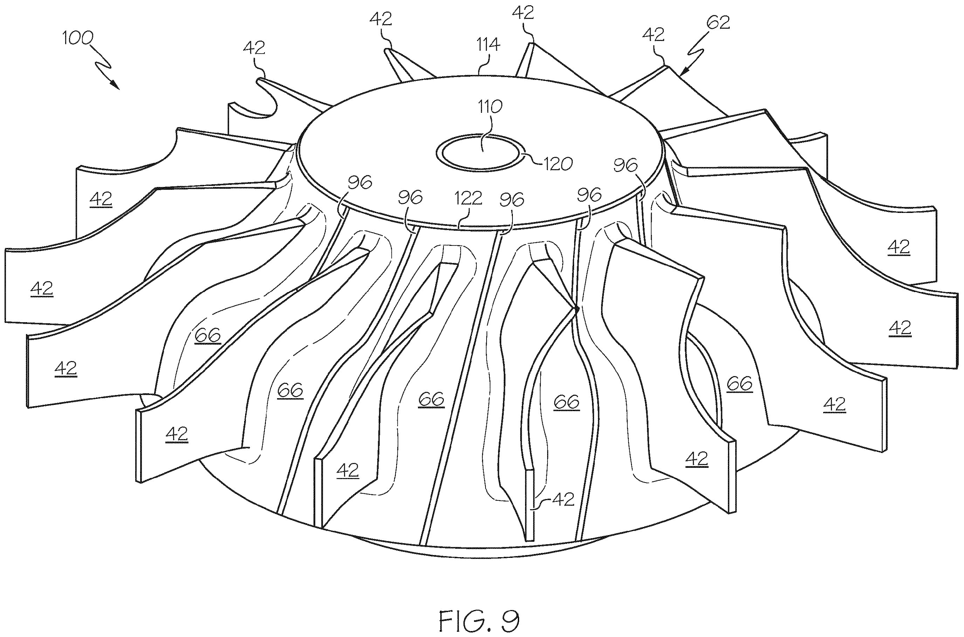

Next, at STEP **30** of exemplary method **18** (FIG. 1), sealed ring formation **100** is positioned around a separately-hub disk. When sealed ring formation **100** is positioned around the hub disk, a shank-to-hub bonding interface is further formed between an outer circumference of hub disk and bladed pieces **38** making-up sealed ring formation **100.** FIGs. 8 and 9 are isometric views illustrating sealed ring formation **100** and a hub disk **110** installed within the central opening of sealed ring formation **100.** Afterwards, and as indicated in FIG. 1 at STEP **32,** a hermetic cavity or enclosure is formed enclosing the interfaces formed between adjacent bladed pieces **38** in sealed ring formation **100** (the "shank-to-shank bonding interfaces") and the interfaces between bladed pieces **38** and hub disk **110** (the "shank-to-hub bonding interface"). This can be accomplished by positioning metal diaphragms over the axially-opposed faces of the hub disk and against the opposing sides of sealed ring formation **100.** For example, as further illustrated in FIGs. 8 and 9, first and second metal diaphragms **112** and **114** can be bonded to the opposing faces of hub disk **110** and sealed ring formation **100.** Diaphragms **112** and **114** cooperate with the annular seal formed around ring formation **100** to create a hermetic enclosure containing the interfaces formed between adjacent bladed pieces **38** and between bladed pieces **38** and hub disk **110.**

With continued reference to FIGs. 8 and 9, different techniques can be utilized to bond the diaphragm edges to sealed ring formation **100** and hub disk **110.** In one embodiment, a localized fusion deposition process of the type described above (e.g., a laser or electron beam welding process) can be utilized to create circumferential joints bonding diaphragms **112** and **114** to ring formation **100** and hub disk **110.** For example, computer-controlled laser weld tool **90** can again be utilized to create inner and outer circumferential joints **116** and **118,** respectively, bonding the outer and inner perimeters of metal diaphragm **112** of hub disk **110** and sealed ring formation **100** (shown in FIG. 8). Similarly, laser weld tool **90** may also be utilized to create inner and outer circumferential joints **120** and **122,** respectively, bonding the outer and inner perimeters of metal diaphragm **114,** hub disk **110,** and sealed ring formation **100** (shown in FIG. 9). After bonding metal diaphragms **112** and **114** to sealed ring formation **100,** the resulting hermetic enclosure containing hub disk **110** is evacuated utilizing, for example, vacuum pump and a pinch tube integrated into diaphragm **112** or diaphragm **114** (not shown). A HIP process can then be performed to diffusion bond bladed pieces **38** and hub disk **110** along their respective interfaces.

As noted above, a HIP process may now be performed to diffusion bond bladed pieces **38** and hub disk **110** along their mating interfaces (STEP **32**, FIG. 1). During the HIP process, sealed ring formation **100** and hub disk **110** are exposed to elevated temperatures and pressures external to the hermetic cavity sufficient to diffusion bond the shank-to-shank bonding interfaces and the shank-to-hub bonding interface. More specifically, HIP bonding can be performed by placing sealed ring formation **100,** hub disk **110,** diaphragm **112,** and diaphragm **114** within a furnace and subjecting the structure to elevated temperatures and pressures sufficient to create the desired diffusion bond between sealed ring formation **100** and hub disk **110.** Afterwards, the structure can be withdrawn from the HIP furnace and metal diaphragms **112** and **114** removed by, for example, machining. After bonding sealed ring formation **100** to hub disk **110,** additional processing steps may be performed to complete fabrication of the dual alloy bladed rotor (STEP **34,** FIG. 1). Such steps may include further heat treatment steps, the application of a coating or coating system, additional machining to create the more detailed or refined features of the finished bladed rotor, or any combination thereof.

FIG. 10 illustrating a dual alloy bladed rotor **130** in a completed state and produced from hub disk **110** and ring formation **100,** which has now been metallurgically consolidated into a blade ring bonded to hub disk **110.** As can be seen, additional machining has been performed to impart dual alloy bladed rotor **130** with an axial bore or central channel **132** extending through hub disk **110.** Additionally, a castellated or toothed tubular protrusion **134** has been formed on hub disk **110** for the purpose of mating with a corresponding castellated or toothed member when dual alloy bladed rotor **130** is installed within, for example, a gas turbine engine. The outer circumferential regions of bladed rotor **130** defining gas flow paths **66** may also be machined. In this case, alloy-filled joints **96** may be removed in whole or in part. In the exemplary embodiment shown in FIG. 10, for example, alloy-filled joints **96** have been partially removed due to machining of upstream portions of gas flow paths **66.** In further embodiments, alloy-filled joints **96** may be removed in their entirety during the post-HIP machining. Alternatively, alloy-filled joints **96** may be left intact even when protruding radially outward from the surfaces defining gas flow paths **66** as joints **96** will typically be orientated in the general direction of gas flow and therefore have little aerodynamic impact or penalty on bladed rotor **130** during operational thereof. In still further embodiments, dual alloy bladed rotor **130** may be machined to include various other structural additional features, such as stress relief slots radially extending into the body of rotor **130** at locations between blades **42.**

The foregoing has provided embodiments of a manufacturing process for producing a dual alloy bladed rotor including a hub disk and rotor blades fabricated from different alloys tailored to their unique operating environments. During the above-described manufacturing process, bladed pieces are arranged in a ring formation, and a metallic sealing material is deposited between contiguous bladed pieces to produce an outer circumferential seal around the ring formation. The metallic sealing material is advantageously deposited utilizing a computer-controlled localized fusion deposition process, such as laser or electron beam welding, to precisely regulate the heat input to the rotor blades and better preserve blade alloy strength. A HIP process is then carried-out to diffusion bond the bladed pieces along their mating interfaces and, perhaps, to further diffusion bond the bladed pieces to a hub disk. By virtue of such a manufacturing process, the hub disk can be fabricated from a first alloy (e.g., an equiax superalloy) having high mechanical strength at operational temperatures, while the rotor blades are produced from a second alloy (e.g., a single crystal or directionally-solidified superalloy) providing good mechanical strength and oxidation resistance under high temperature conditions. As compared to other manufacturing processes enabling an outer blade ring to be joined to a hub disk, the above-described manufacturing process can reduce the cost and complexity of rotor manufacture, minimizes leakage across the turbine rotor, and allows a decrease in the overall size and weight of the turbine rotor.

While multiple exemplary embodiments have been presented in the foregoing Detailed Description, it should be appreciated that a vast number of variations exist. It should also be appreciated that the exemplary embodiment or exemplary embodiments are only examples, and are not intended to limit the scope, applicability, or configuration of the invention in any way. Rather, the foregoing Detailed Description will provide those skilled in the art with a convenient road map for implementing an exemplary embodiment of the invention. It being understood that various changes may be made in the function and arrangement of elements described in an exemplary embodiment without departing from the scope of the invention as set-forth in the appended Claims.

## Claims

1. A method (18) for manufacturing a bladed rotor (130), the method comprising:
arranging (26) bladed pieces (38) in a ring formation (100) such that contiguous bladed pieces contact along shank-to-shank bonding interfaces (64), the bladed pieces composed of a first material;
positioning (30) the ring formation around a hub disk (110) having an outer circumferential surface contacted by the bladed pieces along a shank-to-hub bonding interface, the hub disk composed of a second material different than the first material;
and
performing a Hot Isostatic Pressing (HIP) process (34) during which the ring formation and the hub disk are exposed to elevated temperatures and pressures external to the hermetic cavity sufficient to diffusion bond the shank-to-shank bonding interfaces and the shank-to-hub bonding interface;
**characterized in that** the method further comprises depositing a metallic sealing material between contiguous bladed pieces (38) in the ring formation (100) utilizing a computer-controlled fusion deposition process to produce alloy-filled joints (96) around a circumference of the ring formation forming an annular seal around the ring formation, wherein the term alloy-filled joint encompasses a joint at least partially filled with an alloy or a metal that is at least 99 percent pure by weight; forming a hermetic cavity (32) circumferentially bounded by the annular seal and enclosing the shank-to-shank bonding interfaces and the shank-to-hub bonding interface;
and **further characterized in that,** during the computer-controlled fusion deposition process, the metallic sealing material is actively supplied to a site-of-deposition and continually heated to a temperature exceeding the melt or softening point of the metallic sealing material utilizing a computer-controlled heat source.

2. The method (18) of Claim 1 wherein contiguous bladed pieces (38) combine to form flow path junctures (72) when the bladed pieces are arranged in the ring formation (100), and wherein depositing (28) comprises depositing the metallic sealing material along the flow path junctures.

3. The method (18) of Claim 2 further comprising machining (36) the flow path junctures (72) such that the deposited metallic sealing material is at least partially removed after performing the HIP process (34).

4. The method (18) of Claim 2 further comprising selecting the bladed pieces (38) to have chamfered edges (54) that cooperate to form trenches along the flow path junctures (72) when the bladed pieces (38) are arranged in the ring formation (100);
wherein depositing (28) comprises depositing the metallic sealing material into the trenches in sufficient volume to substantially fill each trench and form the alloy-filled joints (96).

5. The method (18) of Claim 1 wherein the computer-controlled fusion deposition process comprises one of the group consisting of laser welding and electron beam welding.

6. The method (18) of Claim 1 further comprising selecting the metallic sealing material to have a ductility greater than the first material.

7. The method (18) of Claim 1 wherein the bladed pieces (38) are cast to include shank sidewall surfaces (52), which contact when the bladed pieces are arranged in the ring formation (100);
wherein the bladed pieces are cast from a single crystal superalloy; and
wherein the method further comprises applying or plating (24) a grain boundary strengthen layer onto the shank sidewall surfaces prior to arranging the bladed pieces in the ring formation.

8. The method (18) of Claim 1 wherein providing a hermetic cavity comprises sealingly attaching first and second diaphragms (112, 114) to the bladed pieces (38) and the hub disk (110) to enclose the shank-to-hub bonding interface within the hermetic cavity;
**characterized in that** the computer-controlled fusion deposition process utilized to produce the alloy-filled joints (96) is further utilized to sealingly attach the first and second diaphragms to the bladed pieces and the hub disk.

9. The method of Claim 1 further comprising loading the bladed pieces (38) into a tooling assembly (60) maintaining the bladed pieces in the ring formation, while leaving the outer circumferential surface of the ring formation uncovered for tooling access during the computer-controlled fusion deposition process;
wherein the tooling assembly applies a clamping force on the bladed pieces in axial and radially inward directions to maintain the bladed pieces in an arch bound state during the computer-controlled fusion deposition process.

## Patentansprüche

1. Verfahren (18) zur Herstellung eines beschaufelten Rotors (130), wobei das Verfahren Folgendes umfasst:
Anordnen (26) von beschaufelten Teilen (38) in einer Ringformation (100), sodass benachbarte beschaufelte Stücke entlang Schaft-zu-Schaft-Bindungsgrenzflächen (64) miteinander in Kontakt kommen, wobei die beschaufelten Teile aus einem ersten Material bestehen;
Positionieren (30) der Ringformation rund um eine Nabenscheibe (110) mit einer äußeren umlaufenden Oberfläche, mit der die beschaufelten Teile entlang einer Schaft-zu-Nabe-Bindungsgrenzfläche in Kontakt kommen, wobei die Nabenscheibe aus einem zweiten Material besteht, das von dem ersten Material verschieden ist; und
Durchführen eines heißisostatischen Pressprozesses (HIP) (34), während dessen die Ringformation und die Nabenscheibe erhöhten Temperaturen und Drücken außerhalb des hermetischen Hohlraums ausgesetzt sind, die ausreichend sind, um die Schaft-zu-Schaft-Bindungsgrenzflächen und die Schaft-zu-Nabe-Bindungsgrenzflächen diffusionszubinden;
**dadurch gekennzeichnet, dass** das Verfahren ferner Folgendes umfasst: Ablagern eines metallischen Abdichtungsmaterials zwischen benachbarten beschaufelten Teilen (38) in der Ringformation (100) unter Verwendung eines computergesteuerten Schmelzablagerungsprozesses zum Produzieren von legierungsgefüllten Fugen (96) rund um einen Umfang der Ringformation, eine ringförmige Dichtung rund um die Ringformation bildend, wobei der Begriff "legierungsgefüllte Fuge" eine Fuge umfasst, die zumindest teilweise mit einer Legierung oder einem Metall, das mindestens zu 99 Gewichtsprozent rein ist, gefüllt ist; Bilden eines hermetischen Hohlraums (32), umlaufend gebunden durch die ringförmige Dichtung und die Schaft-zu-Schaft-Bindungsgrenzflächen sowie die Schaft-zu-Nabe-Bindungsgrenzflächen einschließend; und ferner **dadurch gekennzeichnet, dass**, während des computergesteuerten Schmelzablagerungsprozesses das metallische Abdichtungsmaterial aktiv zu einem Ablagerungsort zugeführt und unter Verwendung einer computergesteuerten Wärmequelle kontinuierlich auf eine Temperatur erwärmt wird, die den Schmelz- oder Erweichungspunkt des metallischen Abdichtungsmaterials überschreitet.

2. Verfahren (18) nach Anspruch 1, wobei benachbarte beschaufelte Teile (38) kombiniert werden, um Strömungspfadverbindungen (72) zu bilden, wenn die beschaufelten Teile in der Ringformation (100) angeordnet sind, und wobei Ablagern (28) Ablagern des metallischen Abdichtungsmaterials entlang der Strömungspfadverbindungen umfasst.

3. Verfahren (18) nach Anspruch 2, ferner umfassend Bearbeiten (36) der Strömungspfadverbindungen (72) in einer Weise, dass das abgelagerte metallische Abdichtungsmaterial nach Durchführen des HIP-Prozesses (34) zumindest teilweise entfernt wird.

4. Verfahren (18) nach Anspruch 2, ferner umfassend Auswählen der beschaufelten Teile (38), um abgefaste Kanten (54) aufzuweisen, die zusammenwirken, um Rinnen entlang der Strömungspfadverbindungen (72) zu bilden, wenn die beschaufelten Teile (38) in der Ringformation (100) angeordnet sind;
wobei Ablagern (28) Ablagern des metallischen Abdichtungsmaterials in den Rinnen in ausreichendem Volumen, um jede Rinne wesentlich zu füllen und die legierungsgefüllten Fugen (96) zu bilden, umfasst.

5. Verfahren (18) nach Anspruch 1, wobei der computergesteuerte Schmelzablagerungsprozess eines aus der Gruppe umfasst, die aus Laserschweißen und Elektronenstrahlschweißen besteht.

6. Verfahren (18) nach Anspruch 1, ferner umfassend Auswählen des metallischen Abdichtungsmaterials, das eine größere plastische Verformbarkeit als das erste Material aufweist.

7. Verfahren (18) nach Anspruch 1, wobei die beschaufelten Teile (38) so gegossen sind, dass sie Schaftseitenflächen (52) umfassen, die in Kontakt kommen, wenn die beschaufelten Teile in der Ringformation (100) angeordnet sind;
wobei die beschaufelten Teile aus einer einzelnen kristallinen Superlegierung gegossen werden; und
wobei das Verfahren ferner Anwenden oder Auftragen (24) einer Korngrenzenverfestigungsschicht auf die Schaftseitenflächen vor dem Anordnen der beschaufelten Teile in der Ringformation umfasst.

8. Verfahren (18) nach Anspruch 1, wobei Bereitstellen eines hermetischen Hohlraums abdichtendes Befestigen der ersten und zweiten Membranen (112, 114) an den beschaufelten Teilen (38) und der Nabenscheibe (110) zum Einschließen der Schaft-zu-Nabe-Bindungsgrenzfläche innerhalb des hermetischen Hohlraums umfasst;
**dadurch gekennzeichnet, dass** der computergesteuerte Schmelzablagerungsprozess, der verwendet wird, um die legierungsgefüllten Fugen (96) zu produzieren, ferner verwendet wird, um die erste und zweite Membran abdichtend an den beschaufelten Teilen und der Nabenscheibe zu befestigen.

9. Verfahren nach Anspruch 1, ferner umfassend Laden der beschaufelten Teile (38) in eine Werkzeuganordnung (60), die beschaufelten Teile in der Ringformation haltend, dabei die äußere umlaufende Oberfläche der Ringformation unbedeckt lassend für Werkzeugzugang während des computergesteuerten Schmelzablagerungsprozesses;
wobei die Werkzeuganordnung eine Klemmkraft auf die beschaufelten Teile in axialer und radial nach innen zeigender Richtung ausübt, um die beschaufelten Teile während des computergesteuerten Schmelzablagerungsprozesses in einem bogenförmigen gebundenen Zustand zu halten.

## Revendications

1. Procédé (18) pour fabriquer un rotor à pales (130), le procédé comprenant :
l'agencement (26) de pièces à pale (38) en une formation de bague (100) de telle sorte que des pièces à pale contiguës entrent en contact le long d'interfaces de liaison pied-à-pied (64), les pièces à pale étant composées d'un premier matériau ;
le positionnement (30) de la formation de bague autour d'un disque de moyeu (110) ayant une surface circonférentielle extérieure avec laquelle entrent en contact les pièces à pale le long d'une interface de liaison pied-à-moyeu, le disque de moyeu étant composé d'un second matériau différent du premier matériau ; et
la réalisation d'un traitement de pressage isostatique à chaud (HIP) (34) durant lequel la formation de bague et le disque de moyeu sont exposés à des températures et pressions élevées, externes à la cavité hermétique, suffisantes pour lier par diffusion les interfaces de liaison pied-à-pied et l'interface de liaison pied-à-moyeu ;
**caractérisé en ce que** le procédé comprend en outre le dépôt d'un matériau de colmatage métallique entre des pièces à pale contiguës (38) dans la formation de bague (100) en utilisant un traitement de dépôt par fusion commandé par ordinateur pour produire des joints remplis d'alliage (96) autour d'une circonférence de la formation de bague formant un cordon de colmatage annulaire autour de la formation de bague, dans lequel le terme joint rempli d'alliage inclut un joint au moins partiellement rempli avec un alliage ou un métal qui est au moins 99 pour cent pur en poids ; la formation d'une cavité hermétique (32) circonférentiellement bornée par le cordon de colmatage annulaire et entournant les interfaces de liaison pied-à-pied et l'interface de liaison pied-à-moyeu ; et
**caractérisé en outre en ce que**, durant le traitement de dépôt par fusion commandé par ordinateur, le matériau de colmatage métallique est activement fourni à un site de dépôt et chauffé de façon continue jusqu'à une température dépassant le point de fusion ou de ramollissement du matériau de colmatage métallique en utilisant une source de chaleur commandée par ordinateur.

2. Procédé (18) selon la revendication 1, dans lequel des pièces à pale contiguës (38) se combinent pour former des jonctions de chemin d'écoulement (72) lorsque les pièces à pale sont agencées en la formation de bague (100), et dans lequel le dépôt (28) comprend le dépôt du matériau de colmatage métallique le long des jonctions de chemin d'écoulement.

3. Procédé (18) selon la revendication 2, comprenant en outre l'usinage (36) des jonctions de chemin d'écoulement (72) de telle sorte que le matériau de colmatage métallique déposé soit au moins partiellement enlevé après la réalisation du traitement de HIP (34) .

4. Procédé (18) selon la revendication 2, comprenant en outre la sélection des pièces à pale (38) pour avoir des bords chanfreinés (54) qui coopèrent pour former des tranchées le long des jonctions de chemin d'écoulement (72) lorsque les pièces à pale (38) sont agencées en la formation de bague (100) ;
dans lequel le dépôt (28) comprend le dépôt du matériau de colmatage métallique dans les tranchées en un volume suffisant pour sensiblement remplir chaque tranchée et former les joints remplis d'alliage (96).

5. Procédé (18) selon la revendication 1, dans lequel le traitement de dépôt par fusion commandé par ordinateur comprend un du groupe constitué de soudage au laser et de soudage par faisceau électronique.

6. Procédé (18) selon la revendication 1, comprenant en outre la sélection du matériau de colmatage métallique pour avoir une ductilité supérieure à celle du premier matériau.

7. Procédé (18) selon la revendication 1, dans lequel les pièces à pale (38) sont moulées pour inclure des surfaces de paroi latérale de pied (52), qui entrent en contact lorsque les pièces à pale sont agencées en la formation de bague (100) ;
dans lequel les pièces à pale sont moulées à partir d'un superalliage cristallin unique ; et
dans lequel le procédé comprend en outre l'application ou le placage (24) d'une couche de renfort intergranulaire sur les surfaces de paroi latérale de pied avant d'agencer les pièces à pale en la formation de bague.

8. Procédé (18) selon la revendication 1, dans lequel la fourniture d'une cavité hermétique comprend l'attache colmatée de premier et second diaphragmes (112, 114) aux pièces à pale (38) et au disque de moyeu (110) pour entourer l'interface de liaison pied-à-moyeu à l'intérieur de la cavité hermétique ;
**caractérisé en ce que** le traitement de dépôt par fusion commandé par ordinateur utilisé pour produire les joints remplis d'alliage (96) est en outre utilisé pour attacher de façon colmatante les premier et second diaphragmes aux pièces à pale et au disque de moyeu.

9. Procédé selon la revendication 1, comprenant en outre le chargement des pièces à pale (38) dans un ensemble d'outillage (60) maintenant les pièces à pale en la formation de bague, tout en laissant la surface circonférentielle extérieure de la formation de bague non couverte pour l'accès d'outillage durant le traitement de dépôt par fusion commandé par ordinateur ;
dans lequel l'ensemble d'outillage applique une force de serrage sur les pièces à pale dans des directions axiale et radiale vers l'intérieur pour maintenir les pièces à pale dans un état lié en arc durant le traitement de dépôt par fusion commandé par ordinateur.
